# EUROPEAN PATENT APPLICATION

(11) **EP 3 537 146 A1**
(43) Date of publication of application: **11.09.2019**
(21) Application number: 19161601.0
(22) Date of filing: 08.03.2019
(51) Int. Cl.: G01N 29/04, F16D 69/02, G01N 29/07

(54) **METHOD AND DEVICE OF INLINE ULTRASONIC TESTING FRICTION MATERIALS AND CLOSED LOOP CONTROL THEREOF**

(30) Priority: 09.03.2018 US 201862640695 P; 05.04.2018 US 201862652974 P
(71) Applicant: Akebono Brake Industry Co., Ltd., Tokyo 103-8534 (JP)
(72) Inventor: Peters, Robert A., 48381 Milford, Michigan (US); Pham, Vuong, 48315 Shelby Township, Michigan (US); Roszman, Eric J., 48866 Ovid, Michigan (US); Xu, Keqin, 48331 Farmington Hills, Michigan (US); Severnak, Scott, 48390 Walled Lake, Michigan (US)
(74) Representative: Kutzenberger Wolff & Partner

(57) **Abstract**

A method comprising the steps of: (a) forming one or more friction materials of a brake pad; and (b) inspecting each of the one or more friction materials with one or more ultrasonic testers while each of the one or more friction materials are within a manufacturing line to determine if each of the one or more friction materials meet one or more desired material properties.

## Description

### FIELD

The present teachings generally relate to the manufacturing of friction materials for a brake pad, and more particularly, to inline ultrasonic testing of the friction materials during manufacturing.

### BACKGROUND

Friction materials are used in a variety of applications to decelerate a vehicle, such as an automobile, motorcycle, or airplane. Frequently, the friction materials are also used to prevent movement of a station vehicle, parked vehicle, or both. One or more frictions materials are frequently applied to a pressure plate to form a brake pad. One or more of the brake pads may be used within a brake system to perform a brake apply to the vehicle by moving the one or more brake pads into contact with a rotating brake rotor to create a clamping force. The clamping force in turn functions to decelerate the vehicle.

Friction materials are frequently manufactured using a variety of processes, including: mixing of raw materials; forming the raw materials into a desired shape of the friction material under heat, pressure, or both; curing the formed shape; grinding of the friction material, scorching of the friction material, or both to remove surface debris or imperfections; painting the friction material; or a combination thereof. The friction material is then assembled with the pressure plate and one or more additional components to form the brake pads.

Friction materials may be tested to determine if the friction materials meet various performance and quality requirements. Specifically, in the automotive industry, requirements are set by the government, original equipment manufacturers (OEM) that purchase the friction materials for their vehicles, and consumers. For example, the federal government sets forth a plurality of requirements for friction materials in Federal Motor Vehicle Safety Standard (FMVSS) 105 and 135 in the United States, while OEMs define their own internal standards that cover product performance under different operating conditions, durability, safety, and product life cycles.

As a result of the performance and quality demands, friction material manufacturers are frequently required to perform laboratory testing to evaluate the friction material and determine if the friction material meets the requirements. The testing may require a variety of equipment to determine various characteristics of the friction material, such as: elasticity, compressibility, hardness, flatness and parallelism, shear strength, visual deformities, chemical composition, moisture content, particle size distribution, or a combination thereof. However, the testing often requires a manufacturer to remove the friction material from the manufacturing line, wait until the friction material is complete before testing, or both, resulting in increased manufacturing cycle times, increased cost, and/or increased scrap. Additionally, because the testing is often performed after the friction material comes off the manufacturing line (i.e., after manufacturing of the friction material, but prior to packaging), the testing is performed as a quality-inspection that determines if the friction material is acceptable or must be scrapped, resulting in a high level of material waste. Alternatively, the testing may be performed on a sample part taken from a batch of friction materials. However, frequently the sample testing is destructive and damages the sample part, also resulting in a high level of material waste.

Examples of friction material testing equipment used during manufacturing are disclosed in U.S. Patent Nos. 3,577,774; 3,720,098; 3,771,354; 4,852,397; 5,038,787; 5,154,081; 5,408,882; 5,714,688; 5,741,971; and 8,689,421; U.S. Patent Publication No. 2003/0006726; and International Publication No. WO 2018/026575, all of which are incorporated by reference herein for all purposes. It would be attractive to have testing equipment that performs the inspection of the friction material prior to the manufacturing process being completed. What it needed is an inline testing machine that performs the inspection of the friction material during the manufacturing process. It would be attractive to have testing equipment that inspects the friction material without damaging the part. What is needed is an ultrasonic testing machine that inspects the friction material in a nondestructive manner. It would be attractive to have testing equipment that may help correct one or more defects within the manufacturing line. What is needed is an inline tester that provides feedback based on testing of the friction material to one or more steps within the manufacturing process to adjust one or more process parameters. It would be attractive to have testing equipment that may help proactively correct one or more defective parts. What is needed is an inline tester that relays feedback to one or more downstream steps within the manufacturing process to proactively correct the defective parts.

### SUMMARY

The present teachings meet one or more of the present needs by providing a method comprising the steps of: (a) forming one or more friction materials of a brake pad; and (b) inspecting each of the one or more friction materials with one or more ultrasonic testers while each of the one or more friction materials are within a manufacturing line to determine if each of the one or more friction materials meet one or more desired material properties.

The present teachings meet one or more of the present needs by providing an apparatus, comprising: (a) a press section for pressing one or more friction materials; (b) a heating section for heating the one or more friction materials; and (c) a testing section including one or more ultrasonic testers.

The present teachings meet one or more of the present needs by providing an apparatus, comprising: (a) a press section for pressing one or more friction materials; (b) a heating section for heating the one or more friction materials; and (c) a testing section including one or more ultrasonic testers.

The present teachings meet one or more of the present needs by providing a method comprising the steps of: (a) mixing one or more materials to form a final blend; (b) forming the final blend into a desired shape; (c) curing the desired shape to form one or more friction materials; and (d) inspecting the friction material with one or more ultrasonic testers while the one or more friction materials are within a manufacturing line to determine if the one or more friction materials meet one or more desired material properties.

### BRIEF DESCRIPTION OF THE DRAWINGS

FIG. 1 is an illustrative example of a manufacturing process for a friction material used with a disc brake;
FIG. 2 is an illustrative example of a manufacturing process for a friction material used with a drum brake;
FIG. 3 is a flowchart illustrating a friction material manufacturing process including an inline ultrasonic testing stage prior to mechanical assembly of a brake pad;
FIG. 4 is a flowchart illustrating a friction material manufacturing process including an inline ultrasonic testing stage prior to painting of the friction material;
FIG. 5 is a flowchart illustrating a friction material manufacturing process including an inline ultrasonic testing stage prior to grinding and/or scorching of the friction material;
FIG. 6 is a flowchart illustrating a friction material manufacturing process including a first inline ultrasonic testing stage prior to curing of the friction material and a second inline ultrasonic testing stage prior to packaging of the friction material;
FIG. 7 is a flowchart illustrating a friction material manufacturing process including a first inline ultrasonic testing stage prior to curing of the friction material and a second inline ultrasonic testing stage prior to packaging of the friction material;
FIG. 8 is a perspective view of a brake pad;
FIG. 9 is a perspective view of an ultrasonic tester in accordance with the manufacturing process disclosed herein; and
FIG. 10 is a close-up perspective view of an ultrasonic tester in accordance with the manufacturing process disclosed herein.

### DETAILED DESCRIPTION

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the description herein, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

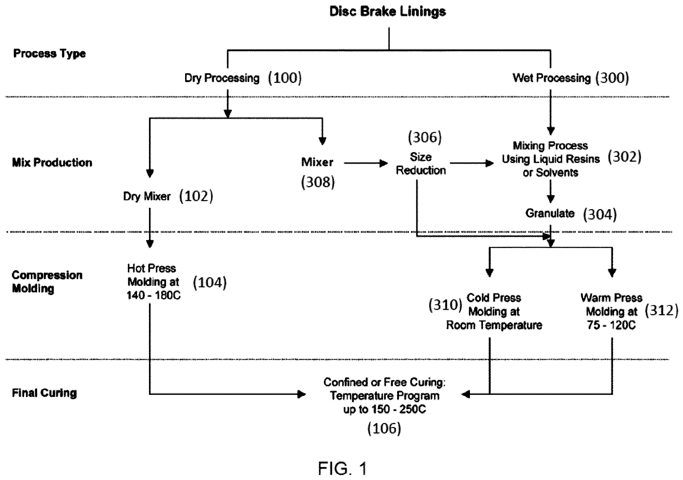

The teachings herein relate to a friction material for a brake system. The friction material (e.g., brake pad or brake shoe) may be manufactured using a variety of methods, processes, stages, manufacturing variables, or a combination thereof. The friction material may be manufactured through a dry process, a wet process, or both. Some or all of the constituents (i.e., the binder, lubricant, filler, ferrous material, etc.) of the friction material may be mixed to create a homogenous mixture. After mixing, the homogenous mixture may undergo preforming, forming, or both, to form a desired shape of the friction material. After forming, the friction material may be cured by exposure to a heightened temperature, a decreased temperature, or both. The friction material may be ground, scorched, or both, to form a desired final shape and surface of the friction material. The friction material may be painted with a surface finish or to include part information directly on the friction material for identification purposes and quality control. During or after completion of manufacturing the friction material, the friction material may be assembled to a pressure plate to form a brake pad. The friction material may be packaged as a separate component or as an assembly with the brake pad (i.e., attached to a pressure plate). The manufacturing process steps identified above may be completed in a variety of orders and the order above is for illustrative purposes only (see FIGS. 1-6). At any point during or after manufacturing, the friction material may be tested, inspected, or both for material characteristics, quality assurance, or both. The friction material may be manufactured in batches (i.e., create a first set of friction materials before beginning the manufacturing of a second set of friction materials), may be manufactured during a continuous process, or both. For example, the manufacturing process may follow a First-In, First-Out (FIFO) process in which the first set of ingredients introduced into the manufacturing line are the first ingredients that are used to form the friction material, while further sets of ingredients are continuously introduced into the manufacturing line to ensure the manufacturing line does not have any downtime (i.e., a duration of time when the manufacturing line is not producing friction materials).

The manufacturing of the friction material may be a dry processing, a wet processing, or both. The dry processing may function to process one or more dry constituents of the friction material through one or more stages of manufacturing. Similarly, the wet processing may function to process one or more wet (i.e., liquid or containing a liquid) constituents of the friction material through one or more stages of manufacturing. The dry processing and the wet process or materials may be completed simultaneously or may be completed in sequence. For example, the dry processing and the wet processing may be done in parallel paths such that, while the dry constituents and the wet constituents remain separate, the manufacturing stages are completed at the same time on both the dry and wet constituents. Alternatively, the dry processing may be completed prior to or after the wet processing. The friction material may be formed through an entirely dry process or an entirely wet process. At some stage during manufacturing, dry processed constituents and the wet process constituents may be combined to create a homogeneous mixture to form the friction material. For example, the mixing of the dry processed constituents and the wet processed constituents to form a homogeneous mixture may be completed during the mixing stage.

The mixing stage may function to combine a plurality of ingredients (i.e., the constituents) of the friction material. The mixing stage may function to mix or blend a single ingredient to create a more homogeneous consistency. For example, the mixing stage may blend a ferrous material in a powdered form so that the power contains a substantially uniform particle size. The mixing stage may mix dry ingredients (i.e., dry processing), wet ingredients (i.e., wet processing), or both. The mixing stage may homogeneously mix both dry and wet ingredients to create a final blend for the friction material. Preferably, the mixing stage adds one or more fluids (i.e., wet ingredients) to the one or more dry ingredients to create a homogeneous blend to form the friction material. The one or more fluids may be added to the one or more dry ingredients, the one or more dry ingredients may be added to the one or more fluids, or both. The mixing stage may reduce a particle size of one or more materials. The mixing stage may grind or chop one or more materials to granulate the one or more materials. Preferably, the mixing stage does not affect the sizes of the materials. A variety of mixing equipment may be used based on a desired final blend required for the friction material. The mixing equipment may contain a static or rotating cylindrical container with one or more static or rotating mixing blades, chopping blades, or both. The mixing blades, chopping blades, or both may open material fibers, disperse ingredients uniformly to form the homogenous mixture, or both. The mixing equipment may include a temperature control for heating the material blend, cooling the material blend, or both. One or more additional solvents or additives may be introduced into the material blend during the mixing stage via a spray nozzle of the mixing equipment. Various mix parameters may be changed during the mixing stage to control the dispersion of ingredients, the consistency of the material blend, or both. Mix parameters may include: mixing time; mixing load (i.e., the amount of each material introduced during the mixing stage to form the final blend); chopping configurations, chopping speed, or both; the order of adding ingredients during the mixing process; or a combination thereof. The mixing stage may include one or more premixing stages to mix one or more pre-mixes prior to mixing the final blend. The ingredients of the friction material may be mixed prior to pre-forming the friction material.

Preforming may function to form the homogeneous mixture of the friction materials into an intermediate shape prior to curing. The preforming may be a green state. The preforming may include one or more presses to form the mixture. The preforming may include one or more calendaring processes to cut and shape the material. For example, the mixture may be formed into briquettes prior to the briquettes undergoing a final pressing that forms a final desired shape of the friction material. The preforming may be completed at room temperature. Preforming may be completed at a heightened temperature (i.e., a hotter temperature relative to room temperature), a decreased temperature (i.e., a cooler temperature relative to room temperature). Preforming may include one or more steps of conditioning the homogeneous mixture by warming the homogeneous mixture, cooling the homogeneous mixture, or both. Preforming may include one or more steps of leveling the homogeneous mixture via one or more mechanical fingers, one or more presses, one or more vibration devices, one or more scrapers, or a combination thereof. The one or more steps of conditioning, one or more steps of leveling, or both of the homogeneous mixture may be performed prior to the preforming, during the preforming, after the preforming, or a combination thereof. Preforming may aid in decreasing waste during the forming process by create briquettes or other preformed shapes that more closely match the dimensions of the final forming press. The manufacturing process of the friction materials may include a single preforming stage or a plurality of preforming stages. The manufacturing process may be free of preforming stages. For example, the manufacturing process may immediately move the resultant mix from the mixing stage directly into the forming stage.

The forming stage may function to form the homogenous mixture of preformed shape into a final desired shape of the friction material. The forming stage may function to form the friction material into a shape in a green state prior to curing of the friction material. The forming stage may include one or more presses that compress the mixture into a desired shape of the friction material. The forming may include one or more calendaring processes to cut and shape the friction material. The forming may be completed during exposure to heat, during exposure to cooler temperatures, at room temperature, or a combination thereof. For example, the forming may initially include a room temperature press prior to a hot press, or vice versa. Alternatively, the pressing stage may include a first press at room temperature, an intermediate press at an intermediate heightened temperature, and a final press at a heightened temperature. The pressing may be completed at a temperature of about 20°C or more, about 40°C or more, about 60°C or more, about 80°C or more, or about 100°C or more. The pressing may be completed at a temperature of about 200°C or less, about 180°C or less, about 160°C or less, about 140°C or less, or about 120°C or less. The pressing may include one or more degassing stages to remove excess gas in the friction material to maintain uniform porosity, prevent cracking of the friction material caused by air pockets, or both. The degassing stages may vary in time duration, frequency, or both. Degassing may include compressing the friction material and then releasing the compression to allow gasses to escape. Degassing may occur before heating the friction material or while the friction material is being heated. The degassing may include about 2 cycles or more, about 10 cycles or more, about 15 cycles or more, or about 20 cycles or more. The degassing may include about 40 cycles or less, about 35 cycles or less, about 30 cycles or less, or about 25 cycles or less. Each degassing cycle may take about 2 seconds or more, about 3 seconds or more, or about 5 seconds or more. Each degassing cycle may take about 1 minute or less, about 45 seconds or less, or about 30 seconds or less. The pressing stage may be adjusted using various press parameters. The press parameters may include time, temperature, pressure, degassing parameters (i.e., frequency or duration), or a combination thereof. Each pressing may take about 1 minute or more, about 2 minutes or more, about 5 minutes or more, or about 10 minutes or more. Each pressing may take about 28 minutes or less, about 27 minutes or less, about 25 minutes or less, or about 20 minutes or less. The pressing may include a press loading of about 20 MPa (megapascal) or more, about 50 MPa or more, or about 100 MPa or more. The pressing may include a press loading of about 200 MPa or less, about 150 MPa or less, or about 120 MPa or less.

The pressing stage may include one or more dies with a press that form a desired shape of the friction material. Each die may include one or more pieces and preferably two or more pieces. Each die may include a top plate, a bottom plate, and one or more side plates. For example, the press may include a first die and a second opposing die that compress together to form the desired shape of the friction material with a side plate located between the first die and the second die to hold the friction material within the die. Each die of the press may be heated to a similar temperature or may be heated to different temperatures. For example, a first die may be heated to a heightened temperature while a second die maintains a room temperature, or vice versa. The heat of the pressing phase may cause liquification of the resin so that the resin flows and holds the components of the friction material together. Each die may include an independent control, or a single control may control a plurality of dies. Alternatively, all of the dies may be free of heating such that heat is applied directly to the material being formed via one or more inlets within the one or more dies. The pressing stage may include one or more coolants to prevent the one or more dies from reaching an undesired temperature. The pressing stage may include controls to dynamically adjust temperature of one or more presses so that the one or more presses maintain a desired temperature throughout the pressing process. The pressing stage may include one or more molds that form the desired shape of the friction material. The mold may be injection molded or may be placed between dies of a press so that the mixture is pressed directly into the mold insert to form the desired shape of the friction material. After the friction material is formed into a desired shape in a green state, the friction material may be cured.

Curing may function to complete a binding process of the friction material to ensure the friction material is hardened and the constituents of the friction material are homogeneously bonded together. Curing may liquify the resin, harden the resin, or both. Curing may be performed to finalize any bonding that may have taken place during the preforming stage, the forming stage, or both. Curing may be performed to develop the heat resistance of the friction material during use. Curing may be completed in batches, continuously, or both. For example, curing may utilize a plurality of ovens that have a capacity in regards to the maximum number of final friction material final shapes that can be cured at once. The plurality of ovens may cure about 10 friction material shapes or more at once, about 25 friction material shapes or more at once, about 50 friction material shapes or more at once, or about 100 friction material shapes or more at once. The plurality of ovens may cure about 200 friction material shapes or less at once, about 150 friction material shapes or less at once, about 125 friction material shapes or less at once, or about 110 friction material shapes or less at once. Alternatively, the curing may be completed continuously by having each friction material shape pass through one or more ovens in a dynamic manner. Curing may vary in duration and temperature. For example, curing may be completed at a heightened temperature of about 150°C or more, about 200°C or more, about 250°C or more, or about 300°C or more. The curing may be completed at a heightened temperature of about 500°C or less, about 450°C or less, about 400°C or less, or about 350°C or less. The curing may be completed over a duration of about 1 minute or more, about 2 minutes or more, about 3 minutes or more, about 5 minutes or more, or about 10 minutes or more. The curing may be completed over a duration of about 20 minutes or less, about 15 minutes or less, about 13 minutes or less, about 12 minutes or less, or about 11 minutes or less. The curing may be completed in a constrained manner under a desired clamp load to maintain compression and forming of the friction material in the desired shape. For example, the curing may maintain a compression load of about 15 MPa or more, about 30 MPa or more, about 45 MPa or more, or about 60 MPa or more. The curing may maintain a compression load of about 120 MPa or less, about 105 MPa or less, about 90 MPa or less, or about 75 MPa or less. Curing may be performed in an unconstrained manner (i.e., no load (i.e., 0 MPa) is applied to the friction material during curing). Curing may be performed using any desired parameters to harden the friction material for using during a braking operation. After the friction material is cured, the friction material may undergo a grinding stage.

Grinding may function to flatten or level one or more surfaces of the friction material so that the friction material meets one or more desired final dimensions. Grinding may remove uneven surfaces. Grinding may flatten two surfaces so that the two surfaces are substantially parallel. The grinding may be performed in any manner that removes a portion of the friction material without damaging the friction material. For example, the grinding may be done using an abrasive grinding wheel, manually using an abrasive surface, a blade, or a combination thereof. The grinding may be performed on every part to meet desired tolerance of the friction material or may only be performed on friction material shapes that are out of specification after inspection. Friction materials that undergo grinding may be cleaned or washed after the grinding process to eliminate debris or powder from one or more surfaces of the friction material. After grinding, the friction material may also undergo a scorching stage.

Scorching may function to burn off organics or unwanted debris on one or more surfaces of the friction material. Scorching may harden specific regions of the friction material. Scorching may help improve friction properties of the friction material. For example, scorching may improve the coefficient of friction at heightened temperatures of the friction material. Scorching may be performed using a variety of methods, such as: applying a direct gas flame to the friction material; contacting the friction material with an electrically heated hot plate; using radiant heat from a heated surface near the friction material; or a combination thereof. Scorching may be varied using parameters such as: temperature; duration of exposure of the friction material to a heat source; intensity of the heat source (i.e., whether the heat is an open flame versus a radiant heat not directly contacting the friction material); or a combination thereof. Scorching completion may be determined by measuring a hardness of the friction material, the Young's modulus of the friction material, a weight loss of the friction material, or a combination thereof. For example, scorching may increase or decrease the elasticity of the friction material so that a change in elasticity of the friction material may be identified after scorching. Scorching may be performed at a temperature greater than a temperature during preforming, forming, pressing, curing, or a combination thereof. For example, curing may be completed at a temperature of between about 150°C-400°C while scorching may be completed at a temperature greater than about 400°C. Scorching may be performed for a duration of about 1 second or more, about 3 seconds or more, or about 5 seconds or more. Scorching may be performed for a duration of about 1 minute or less, about 45 seconds or less, or about 30 seconds or less. After scorching, the friction material may be painted.

Painting may be performed to apply a surface finish to the friction material. Painting may be performed to place product information on the friction material. Painting may include stenciling, painting, etching, stamping, or a combination thereof. One or more stickers may be applied to the friction material during the painting stage. Product information applied to the friction material may be temporary so that the product information only remains on the friction material during packaging and shipping of the friction material, and is removed by the end-user (i.e., a customer, OEM, etc.). Alternatively, product information may be applied so that the product information remains on the friction material during use of the friction material (i.e., during braking operations). Painting may be require drying time, adhering time, or both. Painting may be done at a heightened temperature, at room temperature, or both. Painting may require a curing time. Painting may be completed prior to assembly of the friction material with one or more additional components.

The assembly stage may function to assemble the friction material with one or more materials within a desired application. The friction material may be assembled with one or more additional components to form a brake pad, a brake system, or both. For example, the friction material may be joined with a pressure plate to form a brake pad that is later integrated into a brake system of a vehicle. The friction material may be assembled with one or more additional components at any time during the manufacturing process. For example, the friction material may be applied to a pressure plate during forming, precuring, curing, after curing, or a combination thereof. The friction material may be bonded to one or more components (i.e., a pressure plate) chemically, mechanically, or both. For example, the friction material may be chemically bonded to a pressure plate using one or more binding resins, adhesives, or both. Alternatively, the friction material may be mechanically applied to the pressure plate using one or more mechanical fasteners, retaining mechanisms, or both. The mechanical fasteners may be a screw, bolt, pin, clip, hook, rivet, nut, or a combination thereof. The pressure plate may include integral mechanical fasteners and the friction material and the pressure plate may be pressed together. The retaining mechanisms may be one or more protrusions, one or more arms, or both. For example, the retaining mechanism may be a joint such as a dovetail, t-slot, press-fit, latch, or a combination thereof. Alternatively, the pressure plate may include one or more protrusions, such as teeth or spikes, and the friction material may be applied to the pressure plate using a sufficient force so that the pins or spikes penetrate an abutting surface of the friction material and retain the friction material to the pressure plate. The teeth or spikes may be substantially perpendicular to a surface of the pressure plate or more at an angle other than perpendicular to the pressure plate. For example, the teeth or spikes may be about 15 degrees or more, about 30 degrees or more, or about 45 degrees or more from a surface of the pressure plate. The teeth or spikes may be about 90 degrees or less, about 75 degrees or less, or about 60 degrees or less from the surface of the pressure plate. The friction material may be joined to one or more components during the assembly stage. The one or more components may include one or more pressure plates, retention springs, brake pad clips, fasteners, or a combination thereof to form a brake pad assembly.

The brake pad assembly may function to engage a movable member of the vehicle. The brake pad assembly may be configured to provide a clamping force on the movable member. The brake pad assembly may be in communication additional components to move the brake pad assembly. For example, the brake pad assembly may be in communication with one or more pistons located within a caliper housing to move the brake pad assembly towards the movable member, away from the movable member, or both. The brake pad assembly may move substantially axially relative to an axis of rotation of the movable member so that an engaging surface (e.g., the friction material) of the brake pad assembly is substantially parallel with a surface of the movable member, a plane of the movable member, or both. A plurality of brake pad assemblies may be in communication to create a clamping force on the movable member. For example, a first brake pad assembly and an opposing second brake pad assembly may clamp opposing sides of the movable member to decelerate the vehicle. The first and second brake pad assemblies may move towards and away from the movable member. Alternatively, the first brake pad assembly may be stationary while the second brake pad assembly moves towards and away from the movable member, or vice versa. The brake pad assemblies may include the friction material, a pressure plate, one or more abutment features, one or more springs, one or more clips, or a combination thereof

The pressure plate may function to structurally support one or more friction materials of the brake pad assembly. The pressure plate may be in communication with a caliper housing to move the brake pad assembly towards the movable member, away from the movable member, or both. For example, the pressure plate may be affixed to a piston of the caliper housing that extends and retracts the pressure plate, thereby extending and retracting the brake pad assembly. The pressure plate may have a shape substantially similar to one or more friction materials or may be dissimilar. One or more friction materials may be disposed on, and joined to, a surface of the pressure plate. For example, the one or more friction materials may be disposed on a surface of the pressure plate so that the one or more friction materials are positioned between the pressure plate and the rotor, thereby allowing the one or more friction materials to contact the rotor. The one or more friction materials may be integrally formed with the pressure plate. A plurality of pressure plates may support a single friction material, or a plurality of friction materials may be supported by a single pressure plate. The pressure plate may include one or more attachment points to receive one or more clips, one or more springs, other components, or a combination thereof. The pressure plate may include one or more openings to interface with one or more abutment features of the brake assembly. The pressure plate may include one or more ears protruding from a peripheral edge, surface, or both of the pressure plate.

Testing of the friction material may be completed before packaging of the friction material. Testing of the friction material may be completed after assembly of the friction material and the pressure plate, before the friction material is assembled to the pressure plate, or both. Testing of the friction material may function to analyze one or more material properties of the friction material. Testing of the friction material may function to inspect the friction material and determine if the friction material is within desired parameters, within specification requirements, or both. Testing may include one or more test equipment machines. For example, testing may be completed using a friction assessment and screening (FAST) machine, chase machine, dynamometer, ultrasonic machine, or a combination thereof. Testing of the friction material may be completed at room temperature. Testing of the friction material may be completed at a heightened temperature (e.g., after curing, during curing, or both) and the testing may compensate for the heightened temperature of the friction material. For example, the testing may be completed immediately after curing of the friction material and the testing may adjust test result values based on a change of temperature (i.e., a delta) of the friction material to account for changes in material characteristics. Alternatively, testing may be completed after the friction material has cooled to a desired temperature after one or more manufacturing stages. For example, the friction material may be tested after curing and after a specified duration of time has elapsed to allow for the friction material to cool to a desired temperature after curing. Testing may be performed in a destructive manner. For example, the friction material may be tested in a manner that results in the friction material being unfit for distribution to a customer or OEM, damaged, or both. Testing may be performed in a nondestructive manner so that the friction material remains intact for use. For example, ultrasonic testing may be used on the friction material to ensure the friction material is not damaged or modified prior to shipping the friction material.

Ultrasonic testing may function to perform nondestructive testing on the friction material to determine one or more material characteristics, perform quality inspection of the friction material compared to one or more specifications or tolerances, or both. The one or more material characteristics may include hardness, elasticity (i.e., Young's modulus of the friction material), compressibility, temperature, flatness, dimensional testing, particle size distribution, porosity, chemical composition, density, or a combination thereof. Ultrasonic testing may be performed on the friction material, one or more additional components that are assembled with the friction material (e.g., a pressure plate), or both. For example, ultrasonic testing may be performed on the friction material after preforming, forming, curing, grinding, scorching, painting, assembly, or a combination thereof. Ultrasonic testing may be performed on the friction material in a green state, in a final cured state, or both. Ultrasonic testing may be performed to compare one or more friction material parts within the manufacturing line with a sample part that has already been tested and meets one or more desired parameters or specifications (i.e., a "Golden" part). Ultrasonic testing may be completed offline, inline, or both. For example, the manufacturing line for the friction material may include one or more ultrasonic testing stages to test the friction material during the manufacturing process to determine if the friction material is within specification, out of specification, or both. Alternatively, ultrasonic testing may be completed at random on one or more random friction materials removed from the manufacturing line and brought to the ultrasonic machine. Ultrasonic testing may be a single-point testing of the friction material. For example, during ultrasonic testing, an ultrasonic tester may contact a single point on the friction material (or a first point on a first surface and a second corresponding point on an opposing second surface). Ultrasonic testing may be completed on a plurality of points on the friction material. For example, an ultrasonic tester may include a plurality of transmitters, a plurality of receivers, or both that simultaneously contact a plurality of points (or a plurality of corresponding pairs of points on opposing surfaces) of the friction material. The plurality of transmitters, the plurality of receivers, or both may be actuated simultaneously to contact a plurality of points on the friction material, may be actuated independently of one another to contact a plurality of points on the friction material at different times, or both. The plurality of transmitters, the plurality of receivers, or both may compensate for load applied to the friction material so that a local load applied by each of the plurality of transmitters, the plurality of receivers, or both is substantially equal. For example, a head containing a plurality of transmitters, a plurality of receivers or both may include one or more biasing members to evenly distribute the applied load between the plurality of transmitters, the plurality of receivers, or both. Alternatively, ultrasonic testing may be completed with an ultrasonic tester having a single transmitter, a single receiver, or both that contacts a plurality of points of the friction material in sequence. A plurality of ultrasonic tests may be completed on a friction material during an ultrasonic testing stage so that the plurality of ultrasonic tests may be averaged, compared, or both to improve statistical accuracy. Ultrasonic testing may account for fluctuation in manufacturing times of the friction material. Ultrasonic testing may increase a cycle time of testing, increase downtime, or both to accommodate for an increase in manufacturing cycle times, increase in manufacturing downtime, or both. Ultrasonic testing may decrease a cycle time of testing, decrease downtime, or both to accommodate for a decrease in manufacturing cycle times, decrease in manufacturing downtime, or both. Ultrasonic testing may adjust testing cycle time, downtime, or both based on movement time of the friction material between one or more manufacturing stages (i.e., travel time).

Ultrasonic testing may provide feedback to one or more stages of the manufacturing process. For example, a first batch of friction material parts may undergo forming in a first press while a second batch of friction material parts may undergo forming in a second press, and the ultrasonic testing may be performed on a sample part from each the first and second batch to determine if the first press, the second press, or both are performing within specification. The sample parts undergoing ultrasonic testing may be counted to ensure that ultrasonic testing is performed on a sample part passing through each of a plurality of manufacturing equipment. A plurality of ultrasonic testing stages may be present in a single manufacturing line or a single ultrasonic testing machine may be utilized in the manufacturing line. For example, a first ultrasonic testing stage may be located after forming the friction material while a second ultrasonic testing stage may be located after curing of the friction material to check the friction material in intermediate stages of the manufacturing line.

Ultrasonic testing may provide feedback to adjust one or more parameters of one or more stages of the manufacturing process. Ultrasonic testing may provide feedback to maintain one or more parameters of one or more stages of the manufacturing process. Ultrasonic testing may act as a gateway for one or more stages of the manufacturing process. For example, one or more friction materials may undergo ultrasonic testing such that the ultrasonic testing communicates with one or more stages to notify the one or more stages to continue manufacturing, halt manufacturing, or both. The ultrasonic testing may be used for closed loop control of the manufacturing process. The ultrasonic testing may provide forward closed loop control, reverse closed loop control, or both. The forward closed loop control may communicate with one or more stages of the manufacturing process downstream relative to the ultrasonic testing stage to adjust one or more parameters to correct one or more defective friction material parts that fail the ultrasonic testing. The reverse closed loop control may communicate with one or more stages of the manufacturing process prior to the ultrasonic testing stage to adjust one or more parameters so that future batches of friction material parts manufactured are prevented from being out of one or more specifications. When ultrasonic testing is performed inline, feedback may be provided to one or more prior manufacturing stages (i.e., feed-reverse communication), one or more future manufacturing stages (i.e., feed-forward communication), or both. For example, ultrasonic testing may provide feedback to one or more prior manufacturing stages based on test results from testing one or more friction materials to alter one or more parameters to ensure future friction materials being manufactured are within specification. If feedback is provided to both one or more prior manufacturing stages and one or more future manufacturing stages, a baseline inspection may be required. For example, feedback may be provided in a first step to adjust one or more parameters of a future manufacturing stage and provided in a second step to adjust one or more parameters of a prior manufacturing stage so and an inspection of the manufacturing line may be performed between the first and second steps to ensure that each step of adjustments correctly modifies the friction material parts independently of one another. The one or more parameters may be modified during any stage of manufacturing, such as mixing, preforming, forming, curing, grinding, scorching, assembly, or a combination thereof. The one or more parameters adjusted may include temperature, time duration, cycles, composition (e.g., during mixing, the order of adding ingredients may be modified, the amount of each ingredient may be modified, or both), pressure, surface modifications (e.g., during scorching, grinding, or both), or a combination thereof. Alternatively, feedback may be given in a feed-forward manner so that one or more friction materials being tested that fall out of specification may be proactively modified downstream to bring the out of specification friction material back within specification. Feed-forward communication may be provided to adjust one or more parameters similar to the one or more parameters adjusted based on feedback given to one or more prior stages or may adjust one or more different parameters. For example, feed-forward communication may communicate with one or more stages downstream to add one or more additional additives such as glycol, water, alcohol, a reinforcing material (e.g., a para-aramid synthetic fiber), or a combination thereof to interact with the friction material mixture and ensure the friction material keeps within the desired specifications. Alternatively, feed-forward communication may communicate with one or more stages downstream to increase temperature, decrease temperature, or both to accommodate for one or more material characteristics presently out of specification on the friction material being tested. Feedback may be provided based on one or more friction materials being out of specification, nearing a threshold or one or more specifications, or both. Feedback may be provided based on a single friction material part or a plurality of friction material parts. For example, feedback may be provided after testing about one or more parts, about two or more parts, about five or more parts, or about 10 or more parts. Feedback may be provided after testing about 20 or less parts, about 15 or less parts, about 13 or less parts, or about 12 or less parts.

In addition to providing closed loop control, feed-forward communication, reverse-feedback communication, or a combination thereof within the manufacturing line, ultrasonic testing may be performed as a quality inspection to maintain the performance of equipment in one or more stages of the manufacturing line. The quality inspection using the ultrasonic machine may aid in confirming that the manufacturing equipment is calibrated. For example, the ultrasonic machine may reject one or more friction material parts that are out of specification and provide feedback that one or more dies within the preforming stage, the forming stage, the curing stage, or a combination thereof are worn and need to be replaced. A plurality of ultrasonic testing stages may be utilized to ensure that each ultrasonic testing machine is calibrated. For example, a first ultrasonic testing stage and a second ultrasonic testing stage may test a similar friction material part and compare test results. If the test results are within an acceptable deviation relative to each other, the ultrasonic testing equipment may be considered sufficiently calibrated. However, if the test results between the first and second ultrasonic testing stage are outside of an acceptable deviation, feedback may be provided that one or more both of the ultrasonic testing stages must be calibrated. Alternatively, the ultrasonic testing stages may be calibrated based on a sample friction material part that has been previously inspected and is a near-perfect part based one or more parameters, specifications, or both (i.e., the "Golden" part).

Each ultrasonic testing stage may use one or more ultrasonic testers or a plurality of ultrasonic testers. The ultrasonic testers may function to perform the ultrasonic testing, provide feedback to one or more previous manufacturing stages, provide feed-forward communication to one or more future manufacturing stages, provide feedback to maintain manufacturing equipment, or a combination thereof. The ultrasonic testers may determine one or more material properties of a friction material in sequence, simultaneously, or both. For example, the ultrasonic testers may perform ultrasonic testing on the friction material to determine one or more material properties of the friction material while simultaneously determining a thickness of the friction material based on a clamping of the friction material. A plurality of ultrasonic testers may be used at each ultrasonic testing stage. Two or more ultrasonic testers may be used, three or more ultrasonic testers may be used, or four or more ultrasonic testers may be used at each ultrasonic testing stage. Seven or less ultrasonic testers may be used, six or less ultrasonic testers may be used, or five or less ultrasonic testers may be used at each ultrasonic testing stage. For example, a plurality of ultrasonic testers may test separate friction material parts simultaneously at a single ultrasonic testing stage. Alternatively, each friction material part may undergo ultrasonic testing in a first ultrasonic tester and immediately thereafter undergo a second ultrasonic testing in a second ultrasonic tester within a single ultrasonic testing stage. The ultrasonic testers may be structurally rigid while one or more friction material parts pass through the ultrasonic testers for testing. The ultrasonic testers may include one or more dynamic components that move the ultrasonic testers to the one or more friction material parts. The ultrasonic tester may include a base.

The base may function to support one or more friction material parts during ultrasonic testing. The base may be flexible. The base may be sufficiently rigid to support the one or more friction materials during ultrasonic testing. For example, the base may maintain a position of the friction material part during compression of the friction material part between a transmitter and a receiver of the ultrasonic tester. The base may be substantially flat. The base may be planar with one or more surfaces of the manufacturing line. For example, the base may be coplanar with a conveyor belt of the manufacturing line so that the friction material directly moves from the conveyor belt to the base. The base may be integrally formed with one or more surfaces of the manufacturing line. For example, the base may be a section of the conveyor belt such that each friction material part continuously passes through the ultrasonic tester without moving the friction material to a separate surface or station. The base may be sufficiently flat to maintain a position of the friction material. The base may include one or more fastening features to maintain the position of the friction material during. For example, the base may include one or more fixtures, one or more clamps, or both to maintain the position of the friction material. The base may be metallic, plastic, or both. The base my house one or more additional components of the ultrasonic tester. For example, the base may house a transmitter, a receiver, a controller, a display, or a combination thereof. The base may include a compression plate that supports a friction material during testing.

The compression plate may function to support a friction material before testing, during testing, after testing, or a combination thereof. The compression plate may function to elevate the friction material above a transmitter, receiver, or both when the compression plate is not compressed so that wear to the transmitter, receiver, or both is prevented by contact with the friction material. The compression plate may function to compress during testing so that the compression plate contacts a transmitter, receiver, or both located in the base. For example, a friction material may be positioned on the compression plate and a shaft of the ultrasonic tester may compress the friction material in a compression direction until the compression plate contacts the base of the ultrasonic tester, thereby sandwiching the friction material between the shaft and the compression plate abutting the base. After the shaft of the ultrasonic tester is released and moved in a release direction, the compression plate may return to an original uncompressed position. The compression plate may compress in a direction substantially perpendicular to a surface of the base. The compression plate may compress in a direction other than substantially perpendicular to the surface of the base. The compression plate may compress evenly so that the compression plate abuts a surface of the base and is substantially flat. Alternatively, the compression plate may compress unevenly so that one or more portions of the compression plate contact the base while one or more additional portions remain free of contact with the base. The compression plate may vary in thickness. The compression plate may have a thickness of about 0.5 mm or more, about 1 mm or more, or about 2 mm or more. The compression plate may have a thickness of about 5 cm or less, about 4 cm or less, or about 3 cm or less. The compression plate may be substantially planar or may include one or more contoured surfaces. For example, the compression plate may include a recess to receive a friction material for testing. The compression plate may have dimensions substantially similar to the base. The compression plate may be flexible. The compression plate may be sufficiently rigid to support one or more friction materials, compression of the compression plate, or both. The compression plate may be a solid material. The compression plate may be solid and the transmitter, receiver, or both may contact and compress both the compression plate and the friction material during testing. Preferably, the compression plate includes one or more apertures. The one or more apertures may be sufficiently large so that the transmitter, receiver, or both extends into the one or more apertures, through the one or more apertures, or both when the compression plate is compressed. The transmitter, receiver, or both may extend through the apertures and into contact with the friction material when a force is applied to the friction material so that the transmitter, receiver, or both directly contacts the friction material. The compression plate may be in direct contact with the friction material. A contact layer may be located over the compression plate.

The contact layer may function to prevent direct contact between the friction material and the compression plate, prevent the friction material, debris, or both from extending beneath the compression plate, extending through the one or more apertures in the compression plate into contact with transmitter, receiver, or both, or a combination thereof. The contact layer may cover the entire compression plate. The contact layer may cover only the one or more apertures. The contact layer may include a low-friction coating or may be made of a low-friction material. The contact layer may be made of or include a biaxially-oriented polyethylene terephthalate (BoPET), polytetrafluoroethylene (PTFE), polyvinyl fluoride (PVF), or a combination thereof. The compression plate, the contact layer, or both may be compressibly engaged to the base via one or more biasing members.

The biasing members may function to bias a position of the compression plate, a friction material on the compression plate, or both relative to the base, a transmitter, a receiver, or a combination thereof. The biasing members may provide a biasing force to maintain a gap between the compression plate and the base when free of a compression force being applied by the ultrasonic tester (e.g., the shaft of the ultrasonic tester). The gap may be sufficiently large so that, as a friction material is moved into a testing position or being removed from a testing position, the gap separates the transmitter, the receiver, or both and the friction material. The gap may be any gap where the compression plate prevents direct contact between the friction material and the transmitter the receiver, or both. The gap may be about 1 cm or more, about 2 cm or more, or about 3 cm or more. The gap may be about 6 cm or less, about 5 cm or less, or about 4 cm or less. The biasing members may be positioned between the compression plate and the base, between the compression plate and a guide plate of the ultrasonic tester, or both. The biasing members may be positioned along a peripheral edge of the compression plate or anywhere along an interior surface of the compression plate. A plurality of biasing members may support the compression plate or a single biasing member may support the compression plate. The biasing members may be a spring, coil, band, foam, other type of elastic mechanism, or a combination thereof. The biasing members may provide a sufficient force to prevent contact between the friction material and the transmitter, receiver, or both during addition or removal of the friction material from the tester. The total force provided by the one or more biasing members and preferably the plurality of biasing members may be about 2 N or more, preferably about 4 N or more, more preferably about 6 N or more, or most preferably about 10 N or more. The total force provided by the one or more biasing members and preferably the plurality of biasing members may be about 50 N or less, about 40 N or less, or about 30 N or less. The total force may be divided by the total number of biasing members in contact with the compression plate. Thus, for example, if the total force is 40 N and there are 4 biasing members, each biasing member will provide about 10 N of force on the compression plate. The biasing members may be secured to the base, compression plate, or both by adhesives, fasteners, or both. Alternatively, the biasing members may be mechanically secured to the base, compression plate, or both. For example, an end portion of the biasing members may be received by one or more receiving features (e.g., holes) located on the base, compression plate, or both.

A wall may protrude from the base. The wall may be secured to one or more peripheral sides of the base. The wall may function to support one or more components of the ultrasonic tester. The wall may protect one or more friction material parts being tested from debris, moisture, or both. The wall may extend along one or more peripheral sides of the base. The wall may extend along an entire length of the one or more peripheral sides or just a portion of the one or more peripheral sides. The wall may be substantially perpendicular to a surface of the base. The wall may extend at an angle other than substantially perpendicular to a surface of the base. The wall may extend at an angle of about 15 degrees or more, about 30 degrees or more, or about 45 degrees or more relative to the base. The wall may extend at an angle of about 90 degrees or less, about 75 degrees or less, or about 60 degrees or less relative to the base. The wall be structural rigid or may be flexible. The wall may be transparent. The wall may include one or more holes, protrusions, notches, fasteners, threading, or a combination thereof to secure one or more components.

A tower of the ultrasonic tester may be secured to a surface of the wall. The tower may function to house a movable shaft, a transmitter, a receiver, or a combination thereof. The tower may function to position the movable shaft, transmitter, receiver, or a combination thereof over a position of the base. The tower may include one or more movable parts to move the shaft, transmitter, receiver, or a combination thereof. For example, the tower may include an actuator, motor, biasing member, threaded member (e.g., a spindle), lever, or a combination thereof. The tower may include one or more boreholes, cavities, or both to house one or more components of the ultrasonic tester. The tower may be positionable relative to the base, the wall, or both. For example, the wall may include one or more tracks and the tower moves along the one or more tracks to reach a desired position. The tower may be detachable from the wall. The tower may be permanently fixed to the wall.

A shaft may extend from the tower to a position over the base of the ultrasonic tester. The shaft may function to position a transmitter, receiver, or both over the base. For example, the shaft may include a transmitter near a distal end and position the transmitter substantially directly above an opposing receiver located in the base of the ultrasonic tester so that a friction material may be sandwiched between the transmitter and the receiver. The shaft may be movable. For example, the shaft may extend into, and out from, a cavity of the tower during operation. The shaft may include one or more attachments to accommodate one or more different transmitters, receivers, or both. For example, the one or more attachments may vary in size and shape depending on the friction material size and shape being manufactured. The one or more attachments may be secured to the shaft via one or more fasteners, one or more adhesives, or both. The shaft may include a friction modifier along an exterior surface to decrease friction between the shaft and the tower during movement. The friction modifier may be grease, oil, other lubricant, or a combination thereof. The shaft may include a guide plate that guides the shaft to contact the friction material during testing.

The guide plate may function to guide the shaft in a desired direction. The guide plate may function to guide a transmitter, receiver, or both secured to a distal end of the shaft in a desired direction to contact a friction material during testing. For example, the guide plate may the transmitter, receiver, or both in a direction substantially perpendicular to a surface of the friction material so that a surface of the transmitter, receiver, or both substantially abuts the surface of the friction material in a planar manner. The shaft may have a diameter similar to the shaft or may have a diameter that is different. For example, the shaft may have a diameter greater than the shaft so that a friction material may be contacted by the shaft without contacting one or more guide pins located along a peripheral edge of the guide plate. The guide plate may maintain a position of the friction material between a receiver and transmitter of the ultrasonic tester so that information may be relayed between the ultrasonic tester and an electronic device via wires connecting the electronic device and the ultrasonic tester.

The wires may extend through the shaft, the tower, the base, additional components of the ultrasonic tester, or a combination thereof to power the ultrasonic tester, relay data of the ultrasonic tester, or both. The wires may connect the ultrasonic tester to one or more stages of the manufacturing line to provide feedback or feed-forward communication to the one or more stages. The wires may connect a transmitter to one or more additional components of the ultrasonic tester. The wires may connect the ultrasonic tester to an additional electronic device.

The electronic device may function to receive data from the ultrasonic tester. The electronic device may relay data receive from the ultrasonic tester to one or more stages of the manufacturing line. The electronic device may function transmit data to the ultrasonic tester. For example, the electronic device may transmit one or more commands to the ultrasonic tester to initiate testing, stop testing, adjust one or more testing parameters, or a combination thereof. The electronic device may be a computer, tablet, phone, hard-drive, storage device, or a combination thereof. The electronic device may receive data from a receiver of the ultrasonic tester.

The receiver may function to receive a signal from the transmitter during testing. The signal may be an ultrasonic wave. The receiver may function to transmit a signal to the transmitter. The receiver may be located within the base of the ultrasonic tester, the shaft of the ultrasonic tester, or both. The receiver may relay data receiver from the transmitter to the electronic device. The receiver may be positioned substantially in line with the transmitter. A plurality of receivers may receive data from a single transmitter or a plurality or transmitters. Alternatively, a plurality of transmitters may send a signal to a single receiver. The receiver may be in contact with a surface of the friction material. The receiver may apply a load on the friction material during testing. The receiver and the transmitter may maintain a gap between one another during testing, before testing, after testing, or a combination thereof. The receiver may include a sensor that senses the presence of one or more friction material parts. The receiver may be stationary or may move during operation of the ultrasonic tester. The receiver may work in conjunction with one or more transmitters to gather test results from the ultrasonic testing.

The transmitter may function to transmit a signal to the receiver. The receiver may be located within the base of the ultrasonic tester, the shaft of the ultrasonic tester, or both. The transmitter may function to receive a signal from the transmitter during testing. The transmitter may be stationary or may move during testing. For example, the transmitter may move to contact the friction material prior to sending a signal through the friction material to the receiver. The transmitter may send a single signal or may send a plurality or signals to the receiver. The transmitter may be located substantially near a proximal end of the shaft nearest a surface of the friction material positioned on the base of the ultrasonic tester. The transmitter may apply a compression force on the friction material during testing. The transmitter may send a signal through the friction material at an angle substantially perpendicular to a surface of the friction material. The transmitter may send a signal through the friction material at an angle other than substantially parallel to the friction material. The transmitter may send a signal through the friction material at an angle of about 15 degrees or more, about 30 degrees or more, or about 45 degrees or more relative to a surface of the friction material. The transmitter may send a signal through the friction material at an angle of about 90 degrees or less, about 75 degrees or less, or about 60 degrees or less relative to the surface of the friction material. The transmitter may send a first signal at a first angle relative to a surface of the friction material and send a second subsequent signal at a second angle relative to the surface of the friction material. The first and second angles may be substantially similar or may be different. The transmitter may send a signal through the friction material based on a command from a controller of the ultrasonic tester.

The controller may function to control one or more activities of the ultrasonic tester. The controller may initiate a testing sequence of the friction material, stop testing of the friction material, adjust one or more parameters of the testing process, communicate with one or more secondary electronic devices, communicate with one or more stages of the manufacturing line, power on the ultrasonic tester, shut down the ultrasonic tester, or a combination thereof. The controller may include one or more electronic components such as a printed circuit board (PCB), capacitor, resistor, transistor, wires, microprocessor, memory unit, sensor, or a combination thereof. The controller may include one or more switches, one or more buttons, one or more levers, or a combination thereof to receive input from a user. The controller may be mounted to the wall, the shaft, the base, the tower, or a combination thereof. The controller may control the shaft, transmitter, receiver, or a combination thereof. The controller may include a display.

The display may function to provide users a visual identification of the ultrasonic testing. The display may indicate a status of the ultrasonic tester, one or more parameters of the ultrasonic tester, test results, or a combination thereof. The display may be a monitor. The monitor may be a light-emitting diode (LED) display, a liquid crystal display (LCD), a plasma display, or a combination thereof. The display may power one and off based on the controller powering on and off the ultrasonic tester. Alternatively, the display may remain on while the ultrasonic tester is powered off or in a standby mode. The display may be mounted to the controller, the wall, the shaft, the base, the tower, or a combination thereof.

The method may include one or more of the following steps performed in virtually any order. The method may include a step of testing one or more pieces of friction material. The method may include a step of mixing one or more ingredients (e.g., wet ingredients, dry ingredients, or both) to form a homogeneous mixture for the friction material. The method may include forming the homogeneous mixture into a desired shape of the friction material. The forming may include a step of preforming the friction material prior to undergoing a final forming step. The method may include a step of curing the friction material. The method may include a step of grinding the friction so that the friction material meets one or more desired dimensions. The method may include a step of scorching one or more surfaces of the friction material. The method may include painting the friction material. The method may include assembling the friction material with one or more additional components (e.g., a pressure plate). The method may include packaging the friction material for shipment, storage, or both.

A method of testing the friction material may be included. The method of testing may include placing one or more friction material parts in one or more testers. The one or more testers may perform one or more tests on the friction material parts. During testing, after testing is completed, or both the one or more testers may provide feedback (i.e., forward closed loop control feedback, reverse closed loop control feedback, or both) to one or more prior manufacturing stages, one or more future manufacturing stages, or both. The feedback may communicate to the one or more prior manufacturing stages, one or more future manufacturing stages or both to adjust one or more manufacturing parameters. The method of testing may include adjusting one or more parameters during the mixing step. Adjusting one or more parameters may include adjusting: mixing time; mixing load, chopping configurations, chopping speed, or both; the order of adding ingredients during the mixing process; or a combination thereof. The method of testing may include adjusting one or more parameters during the preforming step. Adjusting one or more parameters during the preforming step may include adjusting: preforming time; temperature; pressure; or a combination thereof. The method of testing may include adjusting one or more parameters during the forming step. Adjusting one or more parameters during the forming step may include adjusting: forming time; temperature; pressing pressure; degassing parameters (i.e., frequency, duration, or both); or a combination thereof. The method of testing may include adjusting one or more parameters during the curing step. Adjusting one or more parameters during the curing step may include adjusting: temperature; time; pressure (of a compression load during curing); or a combination thereof. The method of testing may include adjusting one or more parameters during the assembly step. The method of testing may include adjusting one or more parameters of the testing step itself to ensure that friction material parts are being inspected in a desired way. The method of testing may adjust the one or more parameters during any combination of steps outlined based on a desired delta value. The method of testing may adjust the temperature of one or more steps by about 1 degree or more, about 5 degrees or more, about 15 degrees or more, or about 20 degrees or more. The method of testing may adjust the temperature of one or more steps by about 40 degrees or less, about 30 degrees or less, or about 25 degrees or less. The method of testing may adjust the duration of time of one or more steps by about 1 second or more, about 10 seconds or more, or about 30 seconds or more. The method of testing may adjust the one or more steps by about 1 minutes or less, about 45 seconds or less, or about 35 seconds or less. The method of testing may adjust an applied load of one or more steps by about 1 MPa or more, about 3 MPa or more, or about 5 MPa or more. The method of testing may adjust an applied load of one or more steps by about 10 MPa or less, about 8 MPa or less, or about 6 MPa or less. The method of testing may adjust a number of cycles of one or more steps by about 1 cycle or more, about 2 cycles or more, or about 3 cycles or more. The method of testing may adjust a number of cycles of one or more steps by about 6 cycles or less, about 5 cycles or less, or about 4 cycles or less. The method of testing may include communicating with one or more manufacturing steps and adding one or more additives to the friction material to modify one or more material characteristics of the friction material.

The method of testing may include a method of ultrasonic testing in a nondestructive manner. The method of ultrasonic testing may include placing one or more friction material parts on a base of one or more ultrasonic testers. The method of ultrasonic testing may include contacting opposing sides of the one or more friction material parts with one or more transmitters of the one or more ultrasonic testers, one or more receivers of the one or more ultrasonic testers, or both. The method of ultrasonic testing may include providing a compression force on the one or more friction material parts via the one or more transmitters, the one or more receivers, or both. The method of ultrasonic testing may include sending feedback to one or more prior manufacturing stages one or more future manufacturing stages or both. The method of ultrasonic testing may include testing one or more friction material parts in an assembled state (e.g., after joining to a pressure plate). For example, the method of ultrasonic testing may include testing one or more friction materials without removing the pressure plate. Preferably, the method of ultrasonic testing may include testing one or more friction material parts prior to assembly. For example, the method of ultrasonic testing may be performed prior to curing the one or more friction material parts (i.e., in a green state), prior to grinding the one or more friction material parts, prior to scorching the one or more friction material parts, prior to painting the one or more friction material parts, or a combination thereof. The method of ultrasonic testing may include sending one or more signals through the one or more friction material parts between the one or more transmitters, one or more receivers, or both. The method of ultrasonic testing may include sending a single signal through the one or more friction material parts to determine one or more material characteristics of the one or more friction material parts. The method of ultrasonic testing may include sending a single signal through the one or more friction materials so that one or more material characteristics (e.g., a Young's modulus) may be determined by a time-of-flight (ToF) of the signal without additional calculations to make one or more calculation adjustments. For example, the method of ultrasonic testing may include sending a signal through the one or more friction materials prior to an assembly step so that a time-of-flight of the signal is directly correlated to one or more material characteristics of the one or more friction materials and calculation adjustments are not required to account for one or more additional factors, components, or both, such as a pressure plate, one or more retention clips, or both.

The method of testing may include a forward control loop step. The forward control loop step may include communicating with one or more future manufacturing steps. The forward control loop step may include adjusting one or more parameters of the one or more future manufacturing steps. For example, ultrasonic testing may be performed prior to curing of the friction material (i.e., after forming of the friction material), so that if the friction material fails the ultrasonic testing, the forward control loop step may include communicating with the curing step, grinding step, scorching step, or a combination thereof and adjusting one or more manufacturing parameters of the curing step, grinding step, scorching step, or a combination thereof to modify the friction material that failed the ultrasonic testing, thereby correcting the friction material so that the friction material now meets one or more specifications. The forward control loop step may include halting one or more future manufacturing step. The forward control loop step may include initiating one or more future manufacturing step.

The method of testing may include a reverse control loop step. The reverse control loop step may include communicating with one or more prior manufacturing steps. The reverse control loop step may include adjusting one or more parameters of the one or more prior manufacturing steps. For example, ultrasonic testing may be performing after curing of the friction material so that, if the friction material fails the ultrasonic testing, the reverse control loop step include communicating with the mixing step, preforming step, forming step, curing step, or a combination thereof and adjusting one or more manufacturing parameters of the mixing step, preforming step, forming step, curing step, or a combination thereof to modify the manufacturing process of future friction material batches (or in a continuous manufacturing process) so that the future friction material meets one or more specifications. The reverse control loop step may include halting one or more prior manufacturing steps. The reverse control loop step may include initiating one or more prior manufacturing step.

The method of testing may include a method of determining which manufacturing equipment one or more friction materials were manufactured in. The method of testing may include performing one or more counts, one or more algorithms, or more calculations, or a combination thereof to distinguish friction material test samples between one or more pieces of manufacturing equipment (i.e., one or more presses, one or more ovens, one or more testers, one or more mixers, or a combination thereof). The method of testing may include determining which piece of manufacturing equipment each friction material part was manufactured in and providing feedback to the respective manufacturing equipment based on testing of each friction material part. The method of testing may include testing friction materials from separate batches manufactured by separate manufacturing equipment. The method of testing may include testing friction materials in a continuous manner, intermittently (i.e., testing a first friction material part, not testing friction material parts for a desired duration of parts, time, or both, and then testing a second friction material part), or both.

The method of testing may include a method of rechecking if one or more friction material parts meet one or more specifications. The method of testing may include performing a first testing step on one or more friction material parts and performing a later second testing step on the one or more friction material parts. The method of testing may include comparing results from the second testing step to respective results from the first testing step, or vice versa. The method of testing may include performing a first and second testing step sequentially to confirm test results, performing a first testing step prior to one or more manufacturing stages and a second testing step after the one or more manufacturing stages, or both. The method of testing may include communicating with one or more manufacturing steps if one or more friction material parts fail the first testing step, the second testing step, the comparative step, of a combination thereof. The method of testing may include a plurality of testing steps (e.g., about three or more testing steps, about four or more testing steps, about five or more testing steps, or a combination thereof). The method of testing may include performing a second testing step on one or more friction materials only if the one or more friction materials fail the first testing step. The method of testing may include performing a second testing step on one or more friction materials even if the one or more friction materials pass the first testing step.

The method of testing may include comparing one or more friction materials to a golden sample. The method of testing may include testing a friction material part, and if the friction material part meets one or more specifications (i.e., is a near-perfect part), using the friction material part as a golden sample. The method of testing may include comparing one or more subsequent friction materials to the golden sample. The method of testing may include calibrating one or more manufacturing steps based on the golden sample. The method of testing may include determining if a friction material part matches the golden sample, and if the part matches, sending the friction material part to one or more future manufacturing steps. The method of testing may include determining if a friction material part matches the golden sample, and if the part does not match: sending feedback and adjusting one or more parameters of one or more future manufacturing steps, one or more prior manufacturing steps, or both; scrapping the friction material; sending the friction material to a quarantine zone; halting one or more future manufacturing steps, one or more prior manufacturing steps, or both; or a combination thereof..

The present teachings relate to the manufacturing, testing, and closed loop control of a manufacturing device and method of manufacture of a friction material of a brake assembly. The friction material may function to assist in decelerating a vehicle, such as a car, bus, truck, train, airplane, or a combination thereof. The friction material may also be integrated into components used for manufacturing or other equipment that require a brake for deceleration of one or more components, such as a lathe, amusement park rides, wind turbines, metal stamping presses, conveyor systems, or a combination thereof. The friction material may contact a movable member and reduce, eliminate, or both movement of the movable member. The friction material may be a point of contact between a pressure member, such as a pressure plate of a brake pad, and a movable member (e.g., a rotor, drum, rotational member, or a combination thereof). The friction material may assist in creating a braking force. The friction material may be used in conjunction with one or more additional components of a brake system. For example, the friction material may be applied to a pressure plate of a brake system to form a brake pad, and a piston of the brake system may apply a force to the brake pad such that the friction material then applies a force to a movable member. A plurality of friction materials may be used. For example, two or more complementary friction materials may be moved into contact with opposing sides of a component to form a brake apply.

The friction material may be formed using a variety of materials compressed together during a manufacturing process. The friction material may be an asbestos-based material that contains short chrysotile asbestos fibers. The asbestos fibers may provide characteristics such as heat resistance, insultation, enhanced friction, or a combination thereof. Preferably, the friction material is free of asbestos. The friction material may be a semi-metallic composition material. The semi-metallic composition may contain a percentage by weight (relative to the total composition) of ferrous metal in the form of fibers, powder, or both. The percentage by weight of ferrous metal may be about 25% or more, about 35% or more, about 45% or more, or about 55% or more. The percentage by weight of ferrous metal may be about 95% or less, about 85% or less, about 75% or less, or about 65% or less. The friction material may be a non-asbestos organic material free of asbestos fibers that contains one or more organic fibers in lieu of the asbestos fibers, such as aramid pulp, ceramic fiber, rockwool, other fibers or whiskers, or a combination thereof. The friction material may be a low-metallic material containing both ferrous and non-ferrous materials. The friction material may be a carbon-based material containing a high percentage by weight of carbon fibers. The carbon-based material may contain a percentage by weight of carbon fibers of about 50% or more, about 60% or more, or about 70% or more. The carbon-based material may contain a percentage by weight of carbon fibers of about 95% or less, about 90% or less, about 80% or less, or about 70% or less. The friction material may be a ceramic-based friction material. The friction material may be a combination of any of the friction materials identified above. Examples of friction material compositions may be found in U.S. Publication No. 2017/0082168, all of which is incorporated by reference herein for all purposes. The friction material may contain a variety of materials based on a desired application, such as ferrous materials, binder resins, lubricants, fillers, processing aids, abrasives, micro-particulate materials, or a combination thereof.

The friction material may include at least one ferrous (i.e., metal-containing) material. The ferrous material may be an abrasive. The ferrous material may have abrasive characteristics (e.g., other materials such as a filler material may also have abrasive characteristics). The ferrous material may be a mineral that includes metal, an oxide, a pure metal, or a combination thereof. The ferrous material may be naturally occurring, synthetic, or both. The ferrous material may be a fiber, a powder, flakes, or a combination thereof. The ferrous material may be extruded, melt-spun, chopped, shaved, cut, formed into a predetermined size (e.g., a fiber length), or a combination thereof. The ferrous material may be in the form of a plurality of particles having a particle size of about 40 microns or less, about 20 microns or less, or about 10 microns or less (e.g., between about 10 microns and about 1 micron). The ferrous material may include magnesium, magnesium oxide, aluminum, aluminum oxide, a metal containing mineral fiber, iron, basalt, chromium oxide, iron chromite, steel, chromium, nickel, tungsten, cobalt, manganese, aluminum, carbon, molybdenum, phosphorus sulfur, silicon, or a combination thereof. The ferrous material may include copper, bronze, or a copper containing component. The ferrous material may be free of copper, bronze, or a copper containing component (i.e., about 0% by weight). The ferrous material may be substantially free of copper, bronze, or a copper containing component (i.e., about 0.5% by weight or less). Different types of ferrous materials may be used to form the overall ferrous material.

The binder may function to combine together and hold together the one or more materials of the friction material in a green state (i.e., a formed state prior to curing and finalizing manufacturing of the friction material), a cured state, or both. The binder may prevent degradation of the friction material due to contact with the environment, one or more movable members, or both. The binder may assist in creating a brake force. The binder may be a phenolic resin. The binder may be an organic binder. The binder may be present in an amount of about 5% by weight or more, about 10% by weight or more, or about 15% by weight or more of the friction material. The binder may be present in an amount of about 25% by weight or less, about 20% by weight or less, or about 17% by weight or less of the friction material. The binder may contain phenol, formaldehyde, or both. The binder may be free (or substantially free) of phenol, formaldehyde, or both. The binder may be an epoxy resin. The binder may be any binder that may combine together and hold together the materials of the friction material.

The lubricants may function to reduce friction between the friction material and the movable member (e.g., a rotor). The lubricants may be a dry lubricant, a solid lubricant or both. The lubricants may be a liquid lubricant or may be provided in liquid form. The lubricants may have a layered structure. The lubricant may have a non-layered structure. The amount of lubricant may be sufficient to help minimize noise during standard braking conditions due to contact between the friction material and the movable member. The lubricants may be coke, petroleum coke, tin sulfide, graphite, natural graphite, synthetic graphic, resilient graphite, a nano-graphite, a coarse graphite, a coarse synthetic graphite, or a combination thereof. The lubricants may vary in particle size.

The filler materials may be present in a sufficient amount to enhance friction, reduce noise, improve wear of the friction material, or a combination thereof. The filler materials may affect the pore size distribution of the friction material so that gases, fluids, or both can freely move in or out of the friction material during application of the friction material. The filler materials may provide porosity, compressibility, an area or reduced density, or a combination thereof. The fillers may be softer than the other materials present in the friction material so that the fillers allow the friction material to compress. The fillers may conduct heat, prevent brittleness, provide strength, or a combination thereof. The fillers may be an inorganic filler, an organic filler, or both. The fillers may be a baryte, calcium carbonate, titanium dioxide, rubber, tire tread dust, cashew dust, ceramic fiber fillers, graphite, wollastonite, rockwool, perlite, vermiculite, xonotlite, titanate, or a combination thereof. The fillers may be free of a bioinsoluble fibers or nanoparticles.

The processing aids may be present in a sufficient amount so that the processing aids create entanglement within the friction material in a green. The processing aids may create mechanical entanglement when the friction material is in the green state, a cured state, or both. The processing aids may bind the friction material, bind the materials of the friction material, or both. The processing aid may be a fibrous reinforcement. The processing aids may be aramid pulp, cellulose pulp, acrylic pulp, or a combination thereof. The processing aids may be present in an amount of about 1 percent by weight or more, about 5 percent by weight or more, about 10 percent by weight or more, or about 12 percent by weight or more. The processing aids may be present in an amount of about 20 percent by weight or less, about 15 percent by weight or less, or about 12 percent by weight or less of the friction material.

The abrasive may include aluminum oxide, chromium oxide, iron chromite, magnesium oxide, metal carbide, silicon carbide, zirconium silicate, monoclinic zirconia, zirconia, or a combination thereof. The metal oxide may be iron oxide, aluminum oxide, chromium oxide, iron chromite oxide, magnesium oxide, or a combination thereof. The metal carbide may be a silicon carbide.

The friction material may include one or more micro-particulate materials. A sufficient amount of micro-particulate materials may be present in the friction material to prevent the friction material from sticking to other metallic components within a brake system (e.g., a disc or drum). The micro-particulate materials may prevent or inhibit galvanic corrosion so that the friction material does not oxidize, the brake components do not stick together, or both. The micro-particulate materials may provide friction (i.e., increase the coefficient of friction), provide hardness, resist in corrosion, or a combination thereof. The micro-particulate materials may include a phosphate, a silicate, an oxygen containing compound, a mineral (natural, synthetic, or both), a zinc containing compound, zinc, a substantially pure metal (i.e., has metal impurities in an amount of about 100 ppm or less), tin powder, calcium, molybdenum, aluminum, or a combination thereof.

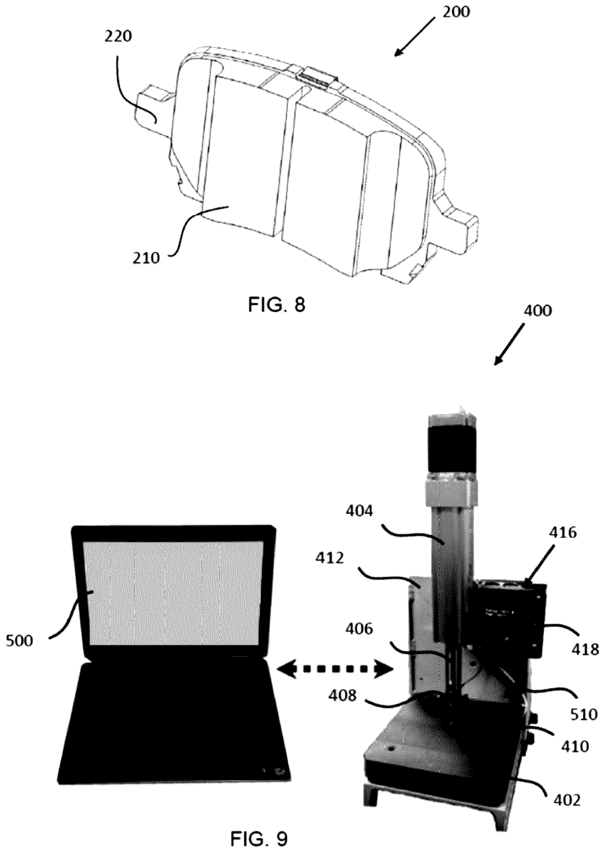

Turning now to the figures, **FIG. 1** illustrates a manufacturing process for a friction material used with a disc brake. The process may include a dry processing of materials (100), a wet processing of materials (300), or both. The process may include a mix production stage (102, 302) using one or more mixers having a mixing blade that homogeneously blends together a plurality of materials to create a final blend that may be used to form the friction material (308). The mixers may also include a chopping blade to further granulate (304) and/or reduce the particle size of the plurality of materials (306). The mixing process may include one or more dry ingredients (102), one or more wet ingredients (302), or both. For example, the one or more dry ingredients may be mixed prior to adding a liquid resin or solvent to the one or more dry ingredients (302). After the mixing production stage (102, 302), the final blend may be placed in a compression mold to form a desired shape of the friction material. During the compression molding stage, the final blend may be shaped at room temperature (310), an intermediate temperature (312; approximately 75-120°C), a hot temperature (104); approximately 140-180°C), or a combination thereof. After the compression molding stage, the resultant mold may be transferred to a final curing stage (106), thereby exposing the resultant mold to a further heightened temperature (approximately 150-250°C). It should be noted that the friction material may be joined to a pressure plate or backing at any time during or after the molding stage (see FIG. 8).

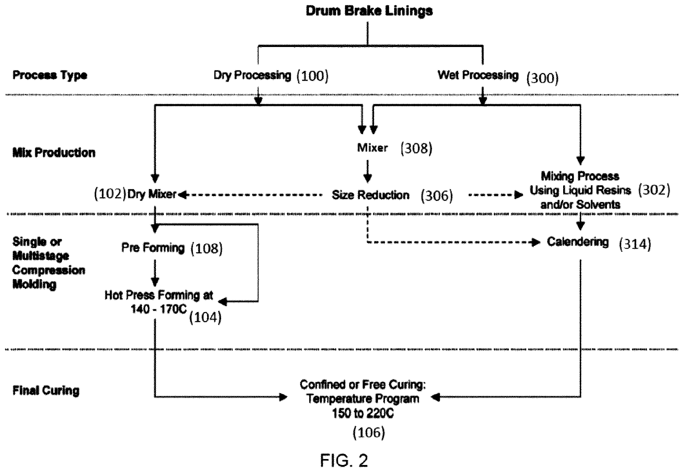

**FIG. 2** illustrates a manufacturing process for a friction material used with a drum brake. The process may include a dry processing of materials (100), a wet processing of materials (300), or both. The process may include a mix production stage (102, 302) using one or more mixers having a mixing blade that homogeneously blends together a plurality of materials to create a final blend that may be used to form the friction material (308). The mixers may also include a chopping blade to further reduce the particle size of the plurality of materials (306). The mixing process may include one or more dry ingredients (102), one or more wet ingredients (302), or both. For example, the one or more dry ingredients may be mixed prior to adding a liquid resin or solvent to the one or more dry ingredients (302). After the mixing production stage (102, 302), the final blend may be transferred to a single stage or multistage compression molding to form a desired shape of the friction material. During the compression molding stage, the final blend may be preformed (108) and then hot pressed at approximately 140-180°C (104). Alternatively, the final blend may go through a calender machine to form the final blend into a continuous sheet prior to cutting the final blend to a desired shape (314). After the compression molding stage, the resultant mold may be transferred to a final curing stage to expose the resultant mold to a further heightened temperature (106; approximately 150-220°C). It should be noted that the friction material may be joined to a pressure plate or backing at any time during or after the molding stage (see FIG. 8).

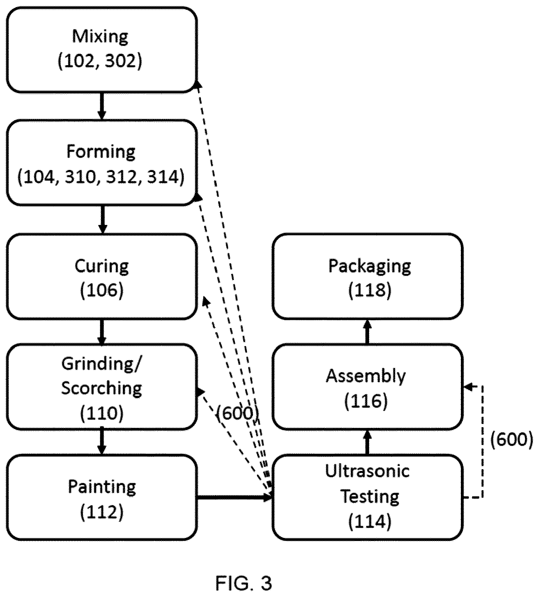

**FIG. 3** illustrates a manufacturing process for a friction material. The manufacturing process may include a mixing stage (102, 302) to mix one or more ingredients that form the friction material. During the mixing stage (102, 302), the one or more ingredients are combined using one or more static or rotating cylindrical containers, one or more heavy-duty mixing and chopping blades, or both. Various mix parameters can be changed to control the dispersion of ingredients and the consistency of the final blend formed from the one or more ingredients, such as mixing time, mixer load, chopping speed and configuration, the order of addition of the one or more ingredients, or a combination thereof. After a final blend is created during the mixing stage (102, 302), the final blend is formed into a desired shape of the friction material (104, 310, 312, 314). During the forming stage, the final blend may be molded onto a pressure plate or backing under high pressure and/or temperatures ranging from approximately room temperature to around 150°C (104, 310, 312). Prior to molding, an adhesive may be applied to the pressure plate or backing to promote adhesion with the friction material. Alternatively, the final blend may be formed in sheets and cut at desired dimensions (314). Additionally, the final blend may be preformed into a desired shape prior to molding the friction material (see FIGS. 1 and 2). After the forming stage (104, 310, 312, 314), the friction material is cured at a heightened temperature (106). After the curing stage (106), the friction material may be grinded and/or scorched (110) to meet desired dimensions and help the initial friction properties of the friction material. When grinding and/or scorching (110) is complete, the friction material may be painted with product information (112). After painting (112), the friction material may undergo ultrasonic testing (114) to determine if material properties of the friction material are within a desired range. If the friction material fails the ultrasonic testing (114), feedback (600) may be relayed to an earlier and/or later stage to suspend manufacturing, adjust manufacturing parameters, or both. As shown, the feedback (600) from the ultrasonic testing (114) is connected to the mixing (102, 302), forming (104, 310, 312, 314), curing (106), and grinding/scorching (110), and based upon testing, one or more of the steps prior to the ultrasonic testing (114) may be varied in order to place the final material properties into a desired range, to mitigate out of specification products, or both. Additionally, the feedback (600) from the ultrasonic testing (114) is connected to the assembly (116), and based upon testing, one or more steps after the ultrasonic testing (114) may be varied in order to place the final material properties into a desired range (i.e., correct the defects of the friction material), to mitigate out of specification products, or both. If the friction material passes the ultrasonic testing (114), it may undergo final assembly (116) and packaging (118).

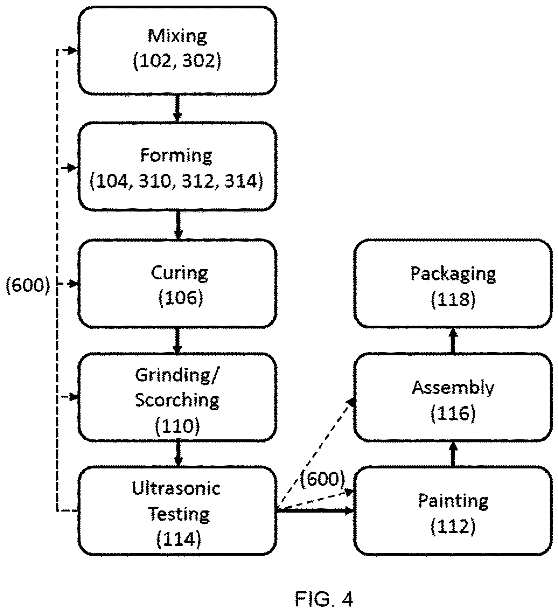

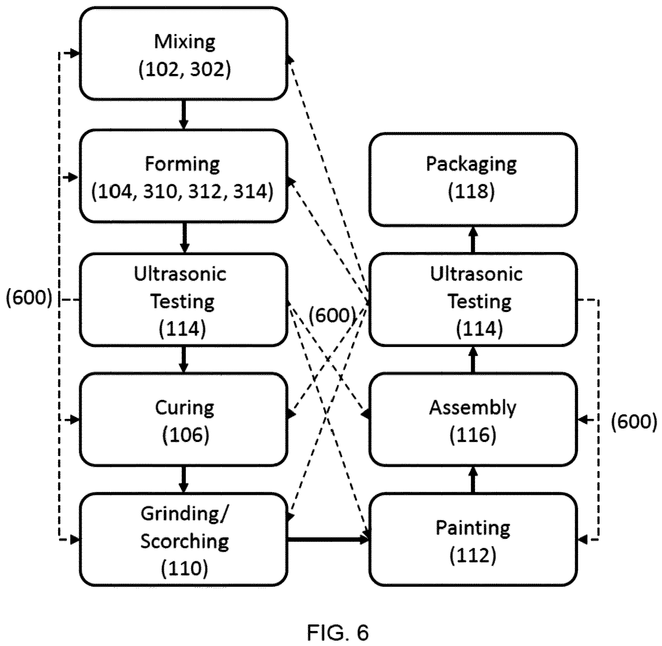

**FIG. 4** illustrates a manufacturing process for a friction material. The manufacturing process may include a mixing stage (102, 302) to mix one or more ingredients that form the friction material. During the mixing stage (102, 302), the one or more ingredients are combined using one or more static or rotating cylindrical containers, one or more heavy-duty mixing and chopping blades, or both. Various mix parameters can be changed to control the dispersion of ingredients and the consistency of the final blend formed from the one or more ingredients, such as mixing time, mixer load, chopping speed and configuration, the order of addition of the one or more ingredients, or a combination thereof. After a final blend is created during the mixing stage (102, 302), the final blend is formed into a desired shape of the friction material (104, 310, 312, 314). During the forming stage, the final blend may be molded onto a pressure plate or backing under high pressure and/or temperatures ranging from approximately room temperature to around 150°C (104, 310, 312). Prior to molding, an adhesive may be applied to the pressure plate or backing to promote adhesion with the friction material. Alternatively, the final blend may be formed in sheets and cut at desired dimensions (314). Additionally, the final blend may be preformed into a desired shape prior to molding the friction material (see FIGS. 1 and 2). After the forming stage (104, 310, 312, 314), the friction material is cured at a heightened temperature (106). After the curing stage (106), the friction material may be grinded and/or scorched (110) to meet desired dimensions and help the initial friction properties of the friction material. When grinding and/or scorching (110) is complete, the friction material may undergo ultrasonic testing (114) to determine if material properties of the friction material are within a desired range. If the friction material fails the ultrasonic testing (114), feedback may be relayed to an earlier and/or later stage to suspend manufacturing, adjust manufacturing parameters, or both (see FIGS. 3 and 6). As shown, the feedback (600) from the ultrasonic testing (114) is connected to the mixing (102, 302), forming (104, 310, 312, 314), curing (106), and grinding/scorching (110), and based upon testing, one or more of the steps prior to the ultrasonic testing (114) may be varied in order to place the final material properties into a desired range, to mitigate out of specification products, or both. Additionally, the feedback (600) from the ultrasonic testing (114) is connected to the painting (112) and assembly (116), and based upon testing, one or more steps after the ultrasonic testing (114) may be varied in order to place the final material properties into a desired range (i.e., correct the defects of the friction material), to mitigate out of specification products, or both. If the friction material passes the ultrasonic testing (114), it may be painted with product information (112), undergo final assembly (116), and then packaged (118).

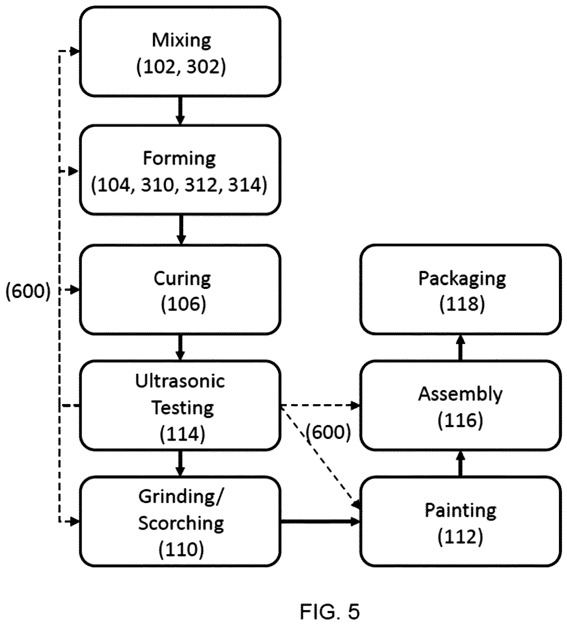

**FIG. 5** illustrates a manufacturing process for a friction material. The manufacturing process may include a mixing stage (102, 302) to mix one or more ingredients that form the friction material. During the mixing stage (102, 302), the one or more ingredients are combined using one or more static or rotating cylindrical containers, one or more heavy-duty mixing and chopping blades, or both. Various mix parameters can be changed to control the dispersion of ingredients and the consistency of the final blend formed from the one or more ingredients, such as mixing time, mixer load, chopping speed and configuration, the order of addition of the one or more ingredients, or a combination thereof. After a final blend is created during the mixing stage (102, 302), the final blend is formed into a desired shape of the friction material (104, 310, 312, 314). During the forming stage, the final blend may be molded onto a pressure plate or backing under high pressure and/or temperatures ranging from approximately room temperature to around 150°C (104, 310, 312). Prior to molding, an adhesive may be applied to the pressure plate or backing to promote adhesion with the friction material. Alternatively, the final blend may be formed in sheets and cut at desired dimensions (314). Additionally, the final blend may be preformed into a desired shape prior to molding the friction material (see FIGS. 1 and 2). After the forming stage (104, 310, 312, 314), the friction material is cured at a heightened temperature (106). After the curing stage (106), the friction material may undergo ultrasonic testing (114) to determine if material properties of the friction material are within a desired range. If the friction material fails the ultrasonic testing (114), feedback may be relayed to an earlier and/or later stage to suspend manufacturing, adjust manufacturing parameters, or both (see FIGS. 3 and 6). As shown, the feedback (600) from the ultrasonic testing (114) is connected to the mixing (102, 302), forming (104, 310, 312, 314), and curing (106), and based upon testing, one or more of the steps prior to the ultrasonic testing (114) may be varied in order to place the final material properties into a desired range, to mitigate out of specification products, or both. Additionally, the feedback (600) from the ultrasonic testing (114) is connected to the grinding/scorching (110), painting (112), and assembly (116), and based upon testing, one or more steps after the ultrasonic testing (114) may be varied in order to place the final material properties into a desired range (i.e., correct the defects of the friction material), to mitigate out of specification products, or both. If the friction material passes the ultrasonic testing (114), the friction material may be grinded and/or scorched (110) to meet desired dimensions and help the initial friction properties of the friction material. When grinding and/or scorching (110) is complete, the friction material may be painted with product information (112), undergo final assembly (116), and then packaged (118).

**FIG. 6** illustrates a manufacturing process for a friction material. The manufacturing process may include a mixing stage (102, 302) to mix one or more ingredients that form the friction material. During the mixing stage (102, 302), the one or more ingredients are combined using one or more static or rotating cylindrical containers, one or more heavy-duty mixing and chopping blades, or both. Various mix parameters can be changed to control the dispersion of ingredients and the consistency of the final blend formed from the one or more ingredients, such as mixing time, mixer load, chopping speed and configuration, the order of addition of the one or more ingredients, or a combination thereof. After a final blend is created during the mixing stage (102, 302), the final blend is formed into a desired shape of the friction material (104, 310, 312, 314). During the forming stage, the final blend may be molded onto a pressure plate or backing under high pressure and/or temperatures ranging from approximately room temperature to around 150°C (104, 310, 312). Prior to molding, an adhesive may be applied to the pressure plate or backing to promote adhesion with the friction material. Alternatively, the final blend may be formed in sheets and cut at desired dimensions (314). Additionally, the final blend may be preformed into a desired shape prior to molding the friction material (see FIGS. 1 and 2). After the forming stage (104, 310, 312, 314), the friction material may undergo ultrasonic testing (114) to determine if material properties of the friction material are within a desired range. If the friction material fails the ultrasonic testing (114), feedback (600) may be relayed to an earlier and/or later stage to suspend manufacturing, adjust manufacturing parameters, or both. As shown, the feedback (600) from the ultrasonic testing (114) is connected to the mixing (102, 302) and forming (104, 310, 312, 314), and based upon testing, one or more steps before the ultrasonic testing (114) may be varied in order to place the final material properties into a desired range, to mitigate out of specification products, or both. Additionally, the feedback (600) from the ultrasonic testing (114) is connected to the curing (106), grinding/scorching (110), painting (112), and assembly (116), and based upon testing, one or more of the steps after the ultrasonic testing (114) may be varied in order to place the final material properties into a desired range (i.e., correct the defects of the friction material), to mitigate out of specification products, or both. If the friction material passes the ultrasonic testing (114), the friction material is cured at a heightened temperature (106). After the curing stage (106), the friction material may be grinded and/or scorched (110) to meet desired dimensions and help the initial friction properties of the friction. When grinding and/or scorching (110) is complete, the friction material may be painted with product information (112) and undergo final assembly (116). Prior to being packaged (118), the friction material may undergo a second ultrasonic testing (114) to determine if the material properties of the friction material are still within the desired range. If the friction material fails the second ultrasonic testing (114), feedback may be relayed to an earlier and/or later stage to suspend manufacturing, adjust manufacturing parameters, or both. As shown, the feedback (600) from the second ultrasonic testing (114) is connected to the mixing (102, 302), forming (104, 310, 312, 314), curing (106), grinding/scorching (110), painting (112), and assembly (116), and based upon testing, one or more steps before the second ultrasonic testing (114) may be varied in order to place the final material properties into a desired range, to mitigate out of specification products, or both. If the friction material passes the second ultrasonic testing (114), the friction material is then packaged (118) as a final assembly.

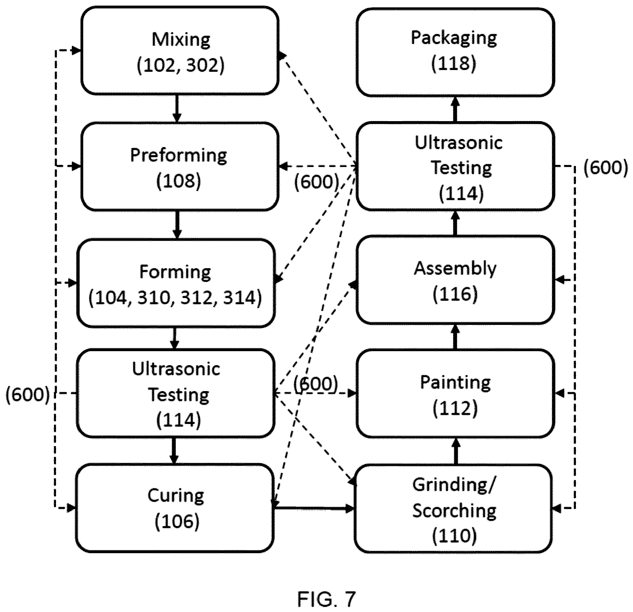

**FIG. 7** illustrates a manufacturing process for a friction material. The manufacturing process may include a mixing stage (102, 302) to mix one or more ingredients that form the friction material. During the mixing stage (102, 302), the one or more ingredients are combined using one or more static or rotating cylindrical containers, one or more heavy-duty mixing and chopping blades, or both. Various mix parameters can be changed to control the dispersion of ingredients and the consistency of the final blend formed from the one or more ingredients, such as mixing time, mixer load, chopping speed and configuration, the order of addition of the one or more ingredients, or a combination thereof. After a final blend is created during the mixing stage (102, 302), the final blend is preformed into an intermediate shape of the friction material (108). After preforming (108), the intermediate shape is formed into a desired shape of the friction material (104, 310, 312, 314). During the forming stage, the final blend may be molded onto a pressure plate or backing under high pressure and/or temperatures ranging from approximately room temperature to around 150°C (104, 310, 312). Prior to molding, an adhesive may be applied to the pressure plate or backing to promote adhesion with the friction material. Alternatively, the final blend may be formed in sheets and cut at desired dimensions (314). Additionally, the final blend may be preformed into a desired shape prior to molding the friction material (see FIGS. 1 and 2). After the forming stage (104, 310, 312, 314), the friction material may undergo ultrasonic testing (114) to determine if material properties of the friction material are within a desired range. If the friction material fails the ultrasonic testing (114), feedback (600) may be relayed to an earlier and/or later stage to suspend manufacturing, adjust manufacturing parameters, or both. As shown, the feedback (600) from the ultrasonic testing (114) is connected to the mixing (102, 302) preforming (108), and forming (104, 310, 312, 314), and based upon testing, one or more steps before the ultrasonic testing (114) may be varied in order to place the final material properties into a desired range, to mitigate out of specification products, or both. Additionally, the feedback (600) from the ultrasonic testing (114) is connected to the curing (106), grinding/scorching (110), painting (112), and assembly (116), and based upon testing, one or more of the steps after the ultrasonic testing (114) may be varied in order to place the final material properties into a desired range (i.e., correct the defects of the friction material), to mitigate out of specification products, or both. If the friction material passes the ultrasonic testing (114), the friction material is cured at a heightened temperature (106). After the curing stage (106), the friction material may be grinded and/or scorched (110) to meet desired dimensions and help the initial friction properties of the friction. When grinding and/or scorching (110) is complete, the friction material may be painted with product information (112) and undergo final assembly (116). Prior to being packaged (118), the friction material may undergo a second ultrasonic testing (114) to determine if the material properties of the friction material are still within the desired range. If the friction material fails the second ultrasonic testing (114), feedback may be relayed to an earlier and/or later stage to suspend manufacturing, adjust manufacturing parameters, or both. As shown, the feedback (600) from the second ultrasonic testing (114) is connected to the mixing (102, 302), preforming (108), forming (104, 310, 312, 314), curing (106), grinding/scorching (110), painting (112), and assembly (116), and based upon testing, one or more steps before the second ultrasonic testing (114) may be varied in order to place the final material properties into a desired range, to mitigate out of specification products, or both. If the friction material passes the second ultrasonic testing (114), the friction material is then packaged (118) as a final assembly.

**FIG. 8** illustrates a perspective view of a brake pad 200. The brake pad 200 includes a friction material 210 disposed on a pressure plate 220.

**FIG. 9** illustrates a perspective view of an ultrasonic tester 400 communicating with an electronic device 500 via one or more wires, wirelessly, or both. The ultrasonic tester 400 includes a base 402 and a tower 404 projecting from the base 402. The tower 404 includes a shaft 406 having a transmitter 408 positioned on a distal end of the shaft 406. The transmitter 408 opposes a receiver 410 located on the base 402 so that a friction material may be placed on the base 402 between the transmitter 408 and the receiver 410 to measure material properties of the friction material via the ultrasonic tester 400. A wall 412 may project from the base 402 and include a controller 416 connected to the transmitter 408, the receiver 410, or both via one or more wires 510 to control the ultrasonic tester 400. The controller 416 may include a display 418 to visually monitor activity of the ultrasonic tester 400. It should be noted that a plurality of ultrasonic testers 400 may be positioned within the manufacturing line of the friction material (see FIGS. 1-7).

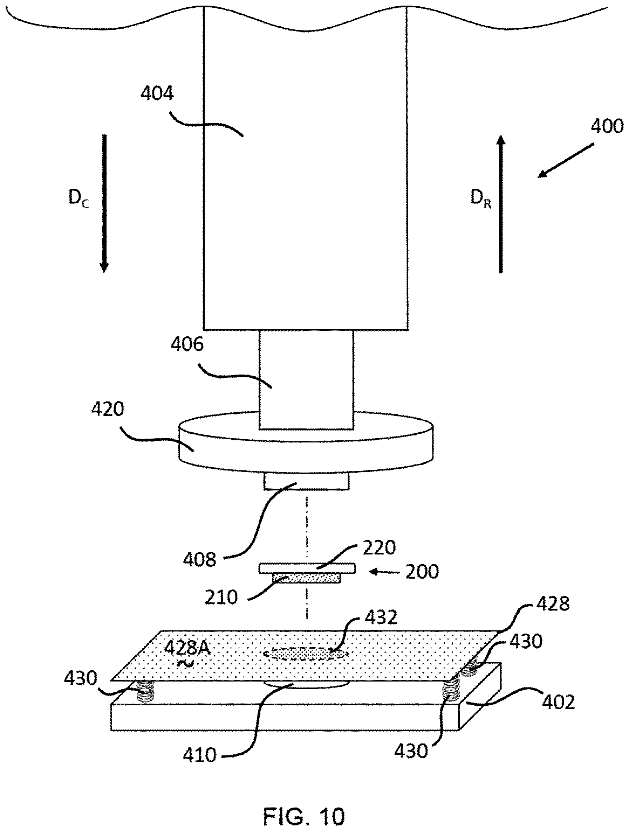

**FIG. 10** illustrates a close-up perspective view of an ultrasonic tester 400. The tester 400 includes a base 402 and a tower 404 positioned over the base 402. The tower 404 includes a shaft 406 having a transmitter 408 positioned on a distal end of the shaft 406. The transmitter 408 opposes a receiver 410 located on the base 402 so that a brake pad 200 may be placed between the transmitter 408 and the receiver 410 to measure material properties of the brake pad 200 via the tester 400. It should be noted that the tester may measure material properties of the pressure plate 220 of the brake pad 200, the friction material 210 disposed on the pressure plate 220, or both. For example, the ultrasonic tester 400 may perform ultrasonic testing of the friction material and determine a thickness of the friction material simultaneously. The tester 400 may also measure material properties of only the pressure plate 220, the friction material 210, or both (i.e., only the pressure plate 220 or the friction material 210 is positioned on the tester, not the entire brake pad 200). The shaft 406 further includes a guide plate 420 that guides and maintains orientation of the transmitter 408 during movement of the shaft 406. For example, once the brake pad 200 is positioned on the receiver 410 of the base 402, the shaft 406 extends in a compression direction (D_{C}) until the brake pad 200 is sandwiched between the transmitter 408 and the receiver 410. During movement in the compression direction (D_{C}), the transmitter 408 compresses the brake pad 200 into a compression plate 428 secured to the base 402 via a plurality of biasing members 430. The compression plate 428 further includes a contact sheet 428A so that the brake pad 200 is free of direct contact with the compression plate 428. As the shaft 406 continues to move in the compression direction (D_{C}), one or more of the biasing members 430 compress in the compression direction (D_{C}) until the compression plate 428 contacts the receiver 410 of the base 402, thereby preventing further movement of the shaft 406 in the compression direction (D_{C}). Upon contact, the receiver 410 may protrude from an aperture 432 extending through the compression plate 428 and the contact sheet 428A so that the receiver 410 directly contacts the brake pad 200. Once testing of the brake pad 200 is complete, the shaft 406 is released and moved in a release direction (D_{R}) back to an initial position, thereby releasing the compression plate 428 and returning the one or more biasing members 430 back to an uncompressed position. Additionally, one or more testers 400 may be positioned within a manufacturing line so that brake pads 200 are tested inline and continuously moved through the one or more testers. It should also be noted that the one or more testers 400 may test a plurality of brake pads 200 simultaneously in a continuous manner, in batches, or both.

The explanations and illustrations presented herein are intended to acquaint others skilled in the art with the invention, its principles, and its practical application. The above description is intended to be illustrative and not restrictive. Those skilled in the art may adapt and apply the invention in its numerous forms, as may be best suited to the requirements of a particular use.

Accordingly, the specific embodiments of the present invention as set forth are not intended as being exhaustive or limiting of the teachings. The scope of the teachings should, therefore, be determined not with reference to this description, but should instead be determined with reference to the appended claims, along with the full scope of equivalents to which such claims are entitled. The omission in the following claims of any aspect of subject matter that is disclosed herein is not a disclaimer of such subject matter, nor should it be regarded that the inventors did not consider such subject matter to be part of the disclosed inventive subject matter.

Plural elements or steps can be provided by a single integrated element or step. Alternatively, a single element or step might be divided into separate plural elements or steps.

The disclosure of "a" or "one" to describe an element or step is not intended to foreclose additional elements or steps.

While the terms first, second, third, etc., may be used herein to describe various elements, components, regions, layers and/or sections, these elements, components, regions, layers and/or sections should not be limited by these terms. These terms may be used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The disclosures of all articles and references, including patent applications and publications, are incorporated by reference for all purposes. Other combinations are also possible as will be gleaned from the following claims, which are also hereby incorporated by reference into this written description.

## Claims

1. A method comprising the steps of:
a. forming one or more friction materials of a brake pad; and
b. inspecting each of the one or more friction materials with one or more ultrasonic testers while each of the one or more friction materials are within a manufacturing line to determine if each of the one or more friction materials meet one or more desired material properties.

2. The method according to claim 1, wherein the one or more ultrasonic testers are part of a closed-loop system.

3. The method according to claim 1 or 2, wherein the inspection step provides feedback to an earlier step of the manufacturing line, and, if the one or more friction materials fail the inspection, or are approaching a specification maximum or minimum, the manufacturing line adjusts one or more manufacturing parameters based on the feedback.

4. The method according to claim 3, wherein the feedback is automatically provided to the earlier step of the manufacturing line.

5. The method according to any of claims 2 through 4, wherein the forming and inspection of the one or more friction materials may be done continuously or in batches.

6. The method according to any of the preceding claims, wherein the one or more ultrasonic testers are in communication with one or more electronic devices to record and relay results of the inspection.

7. The method according to claim 3 or 4, wherein the one or more manufacturing parameters are adjusted during curing, mixing, grinding, scorching, painting, assembling, packaging, or a combination thereof of the one or more friction materials based upon the feedback from the one or more ultrasonic testers.

8. The method according to claim 7, wherein adjusting the manufacturing parameters includes adjusting one or more process conditions, and wherein the process conditions are temperature, press pressure, press duration, or a combination thereof.

9. The method according to claim 8, wherein the temperature is adjusted during curing, grinding, scorching, or a combination thereof to compensate for the one or more friction materials that initially fail to meet the one or more desired material properties in order to correct the one or more friction materials so that the one or more frictions materials meet the one or more desired properties.

10. The method according to any of the preceding claims, wherein the method includes a step of grinding and/or scorching the one or more friction materials, wherein the grinding and/or scorching is performed after step (b).

11. The method according to any of the preceding claims, wherein the method incudes a step of grinding and/or scorching the one or more friction materials, wherein the grinding and/or scorching is performed before step (b).

12. The method according to any of the preceding claims, wherein the method incudes a step of painting the one or more friction materials, wherein the painting is performed after step (b).

13. The method according to any of the preceding claims, wherein the method incudes a step of painting the one or more friction materials, wherein the painting is performed before step (b).

14. The method according to claim 3 or 4, wherein the method incudes a step of painting the one or more friction materials, wherein the painting is performed after step (b).

15. The method according to any of the preceding claims, wherein the one or more ultrasonic testers determine a Young's modulus of the one or more friction materials in a nondestructive manner.
